# EUROPÄISCHE PATENTSCHRIFT

(11) **EP 2 234 833 B1**
(45) Veröffentlichungstag und Bekanntmachung des Hinweises auf die Patenterteilung: **30.05.2012**
(21) Anmeldenummer: 08834702.6
(22) Anmeldetag: 05.12.2008
(51) Int. Cl.: B60K 15/077, B01D 35/027, F02M 37/10

(54) **VORRICHTUNG ZUR HALTERUNG EINES FÖRDERAGGREGATES**
DEVICE FOR MOUNTING A DELIVERY ASSEMBLY
DISPOSITIF DE MAINTIEN D'UN ÉQUIPEMENT DE REFOULEMENT

(30) Priorität: 23.01.2008 DE 102008005522
(43) Veröffentlichungstag der Anmeldung: 06.10.2010
(73) Patentinhaber: Robert Bosch GmbH, 70469 Stuttgart (DE)
(72) Erfinder: MALEC, Radek, 38901 Vodnany (CZ); PTACEK, Vladimir, 14300 Praha 4 (CZ); PTACEK, Martin, 37005 Ceske Budejovice (CZ); SYKORA, Martin, 37011 Ceske Budejovice (CZ); JAROSIK, Josef, 37005 Ceske Budejovice (CZ); GABRIS, Miloslav, 37001 Ceske Budejovice (CZ)
(86) Internationale Anmeldenummer: PCT/EP2008/066882
(87) Internationale Veröffentlichungsnummer: WO 2009/092487

(56) Entgegenhaltungen:
- EP-A- 0 754 483
- EP-A- 1 872 996
- WO-A-99/14485
- DE-A1- 19 848 571

## Beschreibung

### Stand der Technik

Die Erfindung geht aus von einer Vorrichtung zur Halterung eines Förderaggregates nach der Gattung des Hauptanspruchs.
Es ist schon eine Vorrichtung zur Halterung eines Förderaggregates aus der DE 103 56 061 A1 bekannt, mit einem das Förderaggregat aufnehmenden Pumpenhalter, der an einem Speichertopf befestigt ist. Die Vorrichtung ist in einem Kraftstoffbehälter angeordnet.
Von dem Förderaggregat kann Schall über den Pumpenhalter und den Speichertopf auf den Kraftstoffbehälter übertragen werden. Der Pumpenhalter dämpft den vom Förderaggregat ausgehenden Schall, so dass der Betrieb des Förderaggregates von einem Fahrer eines Fahrzeugs möglichst nicht hörbar ist.

Aus der EP-1872996 A ist eine Vorrichtung zur Halterung eines Förderaggregates nach dem Oberbegriff des Anspruchs 1 bekannt.

### Vorteile der Erfindung

Aufgabe der erfindungsgemäßen Vorrichtung ist es die Dämpfung des vom Förderaggregat ausgehenden Schalls zu verbessein

Diese Aufgabe wird durch die Merkmale des Anspruchs 1 gelöst.

Durch die in den Unteransprüchen aufgeführten Maßnahmen sind vorteilhafte Weiterbildungen und Verbesserungen der im Hauptanspruch angegebenen Vorrichtung möglich.

Weiterhin vorteilhaft ist, wenn das erste Halteelement zumindest zwei zueinander beabstandete Ringabschnitte aufweist, die mittels von Stegen miteinander verbunden sind. Auf diese Weise wird ein sehr elastisch dämpfendes erstes Halteelement erreicht.

Gemäß einer vorteilhaften Ausgestaltung ist das erste Halteelement becherförmig oder korbförmig ausgeführt.

Sehr vorteilhaft ist es, wenn das zweite Halteelement einen Einführabschnitt zum leichten Einführen des ersten Halteelementes und anschließend einen Pressungsabschnitt zum Erreichen einer Pressung zwischen den beiden Halteelementen aufweist, da die beiden Halteelemente auf diese Weise leicht und zuverlässig miteinander verbindbar sind. Da der Einführabschnitt und der Pressungsabschnitt unterschiedliche Durchmesser haben, ist zwischen dem Einführabschnitt und dem Pressungsabschnitt des zweiten Halteelementes ist ein ringförmiger Absatz gebildet.

Weiterhin vorteilhaft ist, wenn an dem zweiten Halteelement Rasthaken vorgesehen sind, die mit einem der Ringabschnitte des ersten Halteelements rastend zusammenwirken, da auf diese Weise zusätzlich zur Pressverbindung eine formschlüssige. Verbindung zwischen dem ersten und dem zweiten Halteelement erreicht wird. Dies ist erforderlich, um Bewegung von beiden Halteelementen auszuschließen, weil dies zur Geräusch-Erzeugung führen könnte.

Darüber hinaus vorteilhaft ist, wenn zwischen der Aufnahme des zweiten Halteelementes und dem Pumpenausgang des Förderaggregates ein Dichtring vorgesehen ist, da auf diese Weise ein gedämpfter Kontakt zwischen dem Förderaggregat und dem zweiten Halteelement geschaffen wird, der eine Übertragung von Geräuschen von dem Förderaggregat auf das zweite Halteelement vermindert.

Auch vorteilhaft ist, wenn das zweite Halteelement an einem Topfboden des Speichertopfes befestigt ist, da auf diese Weise eine einfachere und sichere Montage durchgeführt werden kann.

Desweiteren vorteilhaft ist, wenn das Förderaggregat an einem Ende des ersten Halteelementes in axialer und radialer Richtung und in der Aufnahme des zweiten Halteelementes ausschließlich in radialer Richtung gehalten wird, da auf diese Weise eine Verbindung erzeugt wird, die die Belastungskräfte aufnimmt und außerdem eine Geräuschdämpfung erreicht.

### Zeichnung

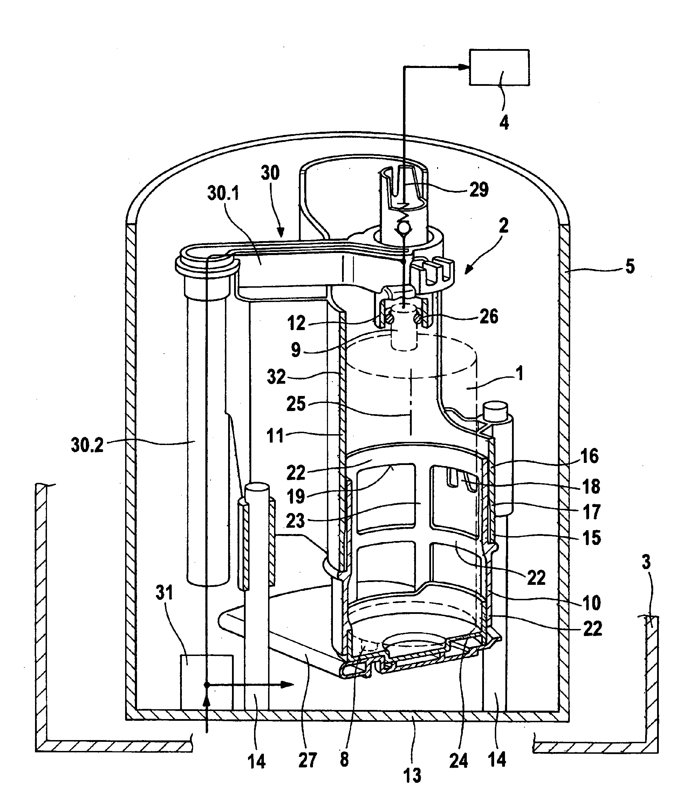

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt im Schnitt eine erfindungsgemäße Vorrichtung zur Halterung eines Förderaggregates.

Die erfindungsgemäße Vorrichtung weist ein Förderaggregat 1 auf, das in einem Pumpenhalter 2 gehalten ist. Sie ist beispielsweise Teil einer Vorrichtung, die Flüssigkeit, beispielsweise Kraftstoff, aus einem Vorratsbehälter 3 ansaugt und druckerhöht zu einem Verbraucher 4, beispielsweise eine Brennkraftmaschine eines Kraftfahrzeugs, fördert.

Der Pumpenhalter 2 ist beispielsweise in einem im Vorratsbehälter 3 vorgesehenen Speichertopf 5 angeordnet, der eine Flüssigkeit, beispielsweise Kraftstoff, für das Förderaggregat 1 bereithält.
Der Pumpenhalter 2 ist gemäß dem Ausführungsbeispiel an dem Speichertopf 5 befestigt, könnte aber auch an dem Vorratsbehälter 3 oder einer anderen Vorrichtung fixiert sein.

Das Förderaggregat 1 hat einen Pumpeneingang 8 und einen Pumpenausgang 9.

Erfindungsgemäß ist vorgesehen, dass der Pumpenhalter 2 ein erstes Halteelement 10 und ein mit dem ersten Halteelement 10 kraft- und formschlüssig verbundenes zweites Halteelement 11 aufweist, wobei das Förderaggregat 1 mit seinem dem Pumpeneingang 8 zugewandten Ende an dem ersten Halteelement 10 gehalten ist und wobei das zweite Halteelement 11 eine Aufnahme 12 aufweist, in die der Pumpenausgang 9 des Förderaggregates 1 hineinreicht und in der das Förderaggregat 1 mit seinem dem Pumpenausgang 9 zugewandten Ende gelagert ist.

Das zweite Halteelement 11 ist am Speichertopf 5 befestigt und im Abstand zu einem Topfboden 13 des Speichertopfes 5 angeordnet. Beispielsweise sind an dem Topfboden 13 Haltebolzen 14 vorgesehen, an denen das zweite Halteelement 11 beabstandet zum Topfboden 13 befestigt ist.

Das erste Halteelement 10 ist auf der dem Topfboden 13 zugewandten Seite des zweiten Halteelementes 11 angeordnet und mit seinem einen Ende mit dem zweiten Halteelement 11 fest verbunden. Das erste Halteelement 10 ist nur einseitig gelagert, so dass sein anderes Ende frei hängt und ohne Kontakt zum Topfboden 13 ausgeführt ist. Das erste Halteelement 10 ragt in das zweite Halteelement 11 hinein, wobei das zweite Halteelement 11 einen Einführabschnitt 15 für das erste Halteelement 10 und einen in Einführrichtung anschließenden Pressungsabschnitt 16 zum Erreichen einer Pressung zwischen den beiden Halteelementen 10,11 aufweist. Da der Einführabschnitt 15 einen größeren Durchmesser aufweist als der Pressungsabschnitt 16, ist zwischen dem Einführabschnitt 15 und dem Pressungsabschnitt 16 des zweiten Halteelementes 11 ein ringförmiger Absatz gebildet. Am Absatz 17 des zweiten Halteelements 11 sind Rasthaken 18 angeordnet, die mit einem Hinterschnitt 19 des ersten Halteelements 10 rastend zusammenwirken. Sobald die Hinterschnitte 19 des ersten Halteelements 10 jeweils über ihren Rasthaken 18 hinweggeschoben sind, ergibt sich eine formschlüssige und kraftschlüssige Verbindung zwischen den Halteelementen 10,11. Die Hinterschnitte 19 sind beispielsweise durch eine untere Kante des obersten Ringabschnitts 22 gebildet.

Das erste Halteelement 10 ist in axialer Richtung gesehen elastischer ausgebildet als das zweite Halteelement 11, um den Schall des Förderaggregates 1 zu dämpfen.
Das erste Halteelement 10 ist beispielsweise becherförmig oder korbförmig ausgeführt ist und weist zumindest zwei zueinander beabstandete Ringabschnitte 22 auf, die mittels von Stegen 23 miteinander verbunden sind. Das erste Halteelement 10 hat einen Halteboden 24, an dem das Förderaggregat 1 anliegt und gelagert ist. Der Halteboden 24 kann auch als Schulter ausgeführt sein. Beispielsweise ist der Halteboden 24 als separates Bauteil ausgeführt und an das erste Halteelement 10 angeclipst. Dieser könnte aber selbstverständlich auch einstückig am ersten Halteelement 10 ausgebildet sein. Das Förderaggregat 1 wird an einem dem Halteboden 24 zugewandten Ende des ersten Halteelementes 10 in axialer und radialer Richtung bezüglich einer Pumpenachse 25 gehalten. An dem ersten Halteelement 10, beispielsweise am Halteboden 24, ist ein Vorfilter 27 vorgesehen, über den das Förderaggregat 1 Flüssigkeit ansaugt.

Das Förderaggregat 1 ist mit seinem Pumpenausgang 9 in die Aufnahme 12 eingesteckt und wird in dieser nur in radialer Richtung bezüglich einer Pumpenachse 25 gehalten. Dabei ist zwischen dem Pumpenausgang 9 und der Aufnahme 12 ein Spalt vorgesehen, der mittels eines Dichtrings 26 abgedichtet ist. Der Dichtring 26 dämpft den vom Förderaggregat 1 auf den Pumpenhalter 2 übergehenden Schall.

An die Aufnahme 12 schließt sich eine zur Brennkraftmaschine 4 führende Druckleitung 29 an. Von der Druckleitung 29 zweigt eine Treibleitung 30 zum Antrieb einer bekannten Saugstrahlpumpe 31 ab, die Kraftstoff aus dem Vorratsbehälter 3 ansaugt und in den Speichertopf 5 fördert. Die Treibleitung 30 ist an dem Pumpenhalter 2 ausgebildet, wobei ein erster Abschnitt 30.1 der Treibleitung 30 einen rechteckigen Leitungsquerschnitt und ein zweiter Abschnitt 30.2 einen runden Leitungsabschnitt aufweist. Der erste Abschnitt 30.1 mündet an seinem einen Ende in die Aufnahme 12 des zweiten Halteelementes 11. Das zweite Halteelement 11 ist hohlzylinderförmig oder ringförmig ausgeführt. Die Aufnahme 12 ist radial innerhalb der Ringwandung 32 des zweiten Halteelementes 11 angeordnet und über Rippen mit dieser verbunden. Der erste Abschnitt 30.1 der Treibleitung 30 ist an der Ringwandung 32 abgestützt und ragt radial in das zweite Halteelement 11 bis an die Aufnahme 12 hinein. Außerdem verläuft der erste Abschnitt 30.1 der Treibleitung 30 nach radial außen über die Ringwandung 32 hinaus bis an den zweiten Abschnitt 30.2.

## Patentansprüche

1. Vorrichtung zur Halterung eines einen Pumpeneingang und einen Pumpenausgang aufweisenden Förderaggregates in einem Kraftstoffbehälter eines Kraftfahrzeuges, mit einem das Förderaggregat aufnehmenden Pumpenhalter, der an einem Speichertopf befestigt ist, wobei der Pumpenhalter (2) ein erstes Halteelement (10) und ein mit dem ersten Halteelement (10) kraft- und formschlüssig verbundenes zweites Halteelement (11) aufweist, und das Förderaggregat (1) mit seinem dem Pumpeneingang (8) zugewandten Ende an dem ersten Halteelement (10) gehalten ist und das zweite Halteelement (11) eine Aufnahme (12) aufweist, in die der Pumpenausgang (9) des Förderaggregates (1) hineinreicht und in der das Förderaggregat (1) mit seinem anderen Ende gelagert ist, **dadurch gekennzeichnet, dass** das erste Halteelement (10) in axialer Richtung gesehen elastischer ausgebildet ist als das zweite Halteelement (11).

2. Vorrichtung nach Anspruch 1, **dadurch gekennzeichnet, dass** das erste Halteelement (10) zumindest zwei zueinander beabstandete Ringabschnitte (22) aufweist, die mittels von Stegen (23) miteinander verbunden sind.

3. Vorrichtung nach Anspruch 1, **dadurch gekennzeichnet, dass** das erste Halteelement (10) becherförmig oder korbförmig ausgeführt ist.

4. Vorrichtung nach Anspruch 1, **dadurch gekennzeichnet, dass** das zweite Halteelement (11) einen Einführabschnitt (15) zum leichten Einführen des ersten Halteelementes (10) und einen Pressungsabschnitt (16) zum Erreichen einer Pressung zwischen den beiden Halteelementen (10,11) aufweist.

5. Vorrichtung nach Anspruch 4, **dadurch gekennzeichnet, dass** zwischen dem Einführabschnitt (15) und dem Pressungsabschnitt (16) des zweiten Halteelementes (11) ein ringförmiger Absatz (17) vorgesehen ist.

6. Vorrichtung nach Anspruch 2, **dadurch gekennzeichnet, dass** an dem zweiten Halteelement (11) Rasthaken (18) vorgesehen sind, die mit einem der Ringabschnitte (22) des ersten Halteelements (10) rastend zusammenwirken.

7. Vorrichtung nach Anspruch 1, **dadurch gekennzeichnet, dass** zwischen der Aufnahme (12) des zweiten Halteelementes (11) und dem Pumpenausgang (9) des Förderaggregates (1) ein Spalt vorgesehen ist, der mittels eines Dichtrings (26) abgedichtet ist.

8. Vorrichtung nach Anspruch 1, **dadurch gekennzeichnet, dass** das Förderaggregat (1) an einem Ende des ersten Halteelementes (10) in axialer und radialer Richtung und in der Aufnahme (12) des zweiten Halteelementes (11) ausschließlich in radialer Richtung gehalten wird.

9. Vorrichtung nach Anspruch 1, **dadurch gekennzeichnet, dass** das zweite Halteelement (11) an einem Topfboden (13) des Speichertopfes (5) befestig bar ist.

## Claims

1. Device for mounting a delivery assembly, having a pump inlet and a pump outlet, in a fuel tank of a motor vehicle, with a pump holder which receives the delivery assembly and which is fastened to an accumulator pot, the pump holder (2) having a first holding element (10) and a second holding element (11) connected non-positively and positively to the first holding element (10), and the delivery assembly (1) being held with its end facing the pump inlet (8) on the first holding element (10), and the second holding element (11) having a receptacle (12), into which the pump outlet (9) of the delivery assembly (1) extends and in which the delivery assembly (1) is mounted with its other end, **characterized in that** the first holding element (10) is designed to be more elastic than the second holding element (11), as seen in the axial direction.

2. Device according to Claim 1, **characterized in that** the first holding element (10) has at least two ring segments (22) which are spaced apart from one another and which are connected to one another by means of webs (23).

3. Device according to Claim 1, **characterized in that** the first holding element (10) is of bowl-shaped or basket-shaped design.

4. Device according to Claim 1, **characterized in that** the second holding element (11) has an introduction portion (15) for the easy introduction of the first holding element (10) and a pressing portion (16) for achieving a press fit between the two holding elements (10, 11).

5. Device according to Claim 4, **characterized in that** a ring-shaped shoulder (17) is provided between the introduction portion (15) and the pressing portion (16) of the second holding element (11).

6. Device according to Claim 2, **characterized in that** latching hooks (18) are provided on the second holding element (11) and cooperate in a latching manner with one of the ring segments (22) of the first holding element (10).

7. Device according to Claim 1, **characterized in that** a gap, which is sealed off by means of a sealing ring (26), is provided between the receptacle (12) of the second holding element (11) and the pump outlet (9) of the delivery assembly (1).

8. Device according to Claim 1, **characterized in that** the delivery assembly (1) is held at one end of the first holding element (10) in the axial and the radial direction and in the receptacle (12) of the second holding element (11) solely in the radial direction.

9. Device according to Claim 1, **characterized in that** the second holding element (11) can be fastened to a pot bottom (13) of the accumulator pot (5).

## Revendications

1. Dispositif de maintien d'un équipement de refoulement présentant une entrée de pompe et une sortie de pompe dans un réservoir de carburant d'un véhicule automobile, comprenant un support de pompe recevant l'équipement de refoulement, qui est fixé à un pot de stockage, le support de pompe (2) présentant un premier élément de maintien (10) et un deuxième élément de maintien (11) connecté par engagement par force et par coopération de forme au premier élément de maintien (10), et l'équipement de refoulement (1) étant maintenu par son extrémité tournée vers l'entrée de pompe (8) sur le premier élément de maintien (10) et le deuxième élément de maintien (11) présentant un logement (12) dans lequel pénètre la sortie de pompe (9) de l'équipement de refoulement (1) et dans lequel l'équipement de refoulement (1) est monté par son autre extrémité, **caractérisé en ce que** le premier élément de maintien (10) est réalisé sous forme plus élastique dans la direction axiale que le deuxième élément de maintien (11).

2. Dispositif selon la revendication 1, **caractérisé en ce que** le premier élément de maintien (10) présente au moins deux portions annulaires (22) espacées l'une de l'autre, qui sont connectées l'une à l'autre au moyen de nervures (23).

3. Dispositif selon la revendication 1, **caractérisé en ce que** le premier élément de maintien (10) est réalisé sous forme de godet ou de panier.

4. Dispositif selon la revendication 1, **caractérisé en ce que** le deuxième élément de maintien (11) présente une portion d'introduction (15) pour l'introduction aisée du premier élément de maintien (10) et une portion de pressage (16) pour réaliser un pressage entre les deux éléments de maintien (10, 11).

5. Dispositif selon la revendication 4, **caractérisé en ce qu'**entre la portion d'introduction (15) et la portion de pressage (16) du deuxième élément de maintien (11) est prévu un épaulement annulaire (17).

6. Dispositif selon la revendication 2, **caractérisé en ce que** des crochets d'encliquetage (18) sont prévus sur le deuxième élément de maintien (11), lesquels coopèrent par encliquetage avec l'une des portions annulaires (22) du premier élément de maintien (10).

7. Dispositif selon la revendication 1, **caractérisé en ce qu'**entre le logement (12) du deuxième élément de maintien (11) et la sortie de pompe (9) de l'équipement de refoulement (1) est prévue une fente qui est rendue étanche au moyen d'une bague d'étanchéité (26).

8. Dispositif selon la revendication 1, **caractérisé en ce que** l'équipement de refoulement (1) est maintenu au niveau d'une extrémité du premier élément de maintien (10) dans la direction axiale et radiale et dans le logement (12) du deuxième élément de maintien (11) exclusivement dans la direction radiale.

9. Dispositif selon la revendication 1, **caractérisé en ce que** le deuxième élément de maintien (11) peut être fixé sur un fond de pot (13) du pot de stockage (5).
